# EUROPÄISCHE PATENTSCHRIFT

(11) **EP 0 443 222 B1**
(45) Veröffentlichungstag und Bekanntmachung des Hinweises auf die Patenterteilung: **14.09.1994**
(21) Anmeldenummer: 90250055.2
(22) Anmeldetag: 19.02.1990
(51) Int. Cl.: E04F 17/02, F16L 37/14, F16L 59/18

(54) **Doppelwandiger Rohrabschnitt für eine Rohrleitung insbesondere einen Schornstein.**
Double-walled pipe element for conducts esp. for flues.
Elément tubulaire à double paroi pour conduits, spécialement conduits de fumée

(43) Veröffentlichungstag der Anmeldung: 28.08.1991
(73) Patentinhaber: LDW METALL-VERARBEITUNG GMBH, D-28865 Lilienthal (DE)
(72) Erfinder: Iffländer, Wolfgang J. F., D-2800 Bremen 33 (DE)
(74) Vertreter: Hoormann, Walter, Dr.-Ing.

(56) Entgegenhaltungen:
- EP-A- 0 060 316
- EP-A- 0 085 455
- CH-A- 672 361
- FR-A- 2 192 267
- GB-A- 652 986
- GB-A- 1 156 972
- GB-A- 1 230 857
- US-A- 4 607 665

## Beschreibung

Die Erfindung betrifft einen doppelwandigen Rohrabschnitt für eine Rohrleitung, insbesondere einen (nicht gemauerten) Schornstein, mit einem Innenrohr und einem konzentrisch zum Innenrohr bzw. dessen Längsmittelachse angeordneten Außenrohr, welches mit Distanzmitteln im Abstand zum Innenrohr gehalten ist, wobei die beiden Rohre jeweils an ihrem einen (Muffen-)Endabschnitt auf einen lichten Innendurchmesser aufgeweitet sind, der dem Außendurchmesser an ihrem anderen Ende entspricht, so daß sie jeweils mit ihrem Muffenabschnitt mit einem benachbarten Rohr gleicher Art in der Art einer Steckverbindung zu verbinden sind, wobei ggf. im Zwischenraum zwischen den beiden Rohren ein Zwischenmaterial (bei einem Schornstein z.B. Isolierwolle oder ein sonstiges Dämmaterial) angeordnet sein kann, und wobei an einem Umfangsabschnitt des einen Rohres mehrere mit gegenseitigem Abstand angeordnete, sich im wesentlichen radial erstreckende Distanzbügel befestigt sind, die jeweils an ihren freien Endabschnitten formschlüssig mit dem anderen Rohr verbunden sind.

Aufgrund der Fortentwicklung von Heizungsanlagen, insbesondere einer verbreiteten Einführung von Niedertemperaturkesseln, hat sich bekanntlich auch die Schornsteintechnik umfassend verändert. Während bei einer Umrüstung einer älteren Heizungsanlage auf eine moderene Niedertemperatur-Anlage in aller Regel der vorhandene, i.a. gemauerte Schornstein durch Einbringen wenigstens eines sog. Schornstein-Einzugsrohres mit den entsprechenden Anschlüssen etc. saniert wird, kommt es bei Neubauten häufig gar nicht mehr zu gemauerten Schornsteinen, sondern es werden rohrförmige Schornsteine installiert, die im wesentlichen aus durch gegenseitiges Einstecken miteinander verbundenen Rohrabschnitten bestehen, welche wiederum in der Regel aus (nichtrostendem Edel-)Stahl(-blech) bestehen. Dabei sind derartige (Edelstahl-)Schornsteine sowohl aus statischen wie auch aus thermodynamischen Gründen in der Regel doppelwandig bzw. zweischalig ausgeführt, so daß auch die Rohrabschnitte, aus denen derartige (Rohr-)Schornsteine zusammengefügt sind, zweckmäßigerweise bereits entsprechend doppelwandig bzw. zweischalig sind, wobei jeweils das Innenrohr über Distanzhalter zum Außenrohr zentriert und zwischen dem Innenrohr (= Innenschale) und dem Außenrohr (= Außenschale) ein i.a. mineralisches Dämmaterial angeordnet ist, um das Wärmegefälle zwischen Innen- und Außenrohr aus den bekannten Gründen möglichst kleinzuhalten.

Aus der Die EP-A-0 085 455 ist ein Rohrabschnitt der hier in Rede stehenden Art bekannt, bei dem als Mittel zur Fixierung des Innenrohrs gegenüber dem Außenrohr ein längliches Verbindungselement vorgesehen ist, wodurch das Innenrohr gegen Längsverschiebung gegenüber dem Außenrohr gesichert wird, sowie eine feste, kompakte Isolierschicht, durch die das Innenrohr gegen "Verkanten" bzw. Winkelbewegungen seiner Längsachse gegenüber der Längsachse des Außenrohrs gesichert wird. Diese Lösung ist dahingehend nachteilig, daß eine feste, formstabile Isolierschicht zwischen den beiden Rohren unverzichtbar ist, da die Innenrohrabschnitte ansonsten nicht zentrierbar wären und um den Abstützpunkt in ihrem Mittelbereich kippen könnten. Ein weiterer Nachteil ergibt sich daraus, daß das Verbindungselement mittels Punktschweißung am Innenrohr befestigt wird. Die schwankend sowohl mit Rauchgasen hoher Temperatur (1000°C und mehr) als auch solchen niedriger Temperatur (bis unter dem Taupunkt der sauren chemischen Abgaskomponenten wie Schwefelsäure u.a.) beaufschlagten Rohre sind daher aufgrund der lokalen Gefügeschädigung durch Schweißen stark korrosionsgefährdet. Eine derartige Rohrleitung müßte - trotz des insgesamt hochwertigen Edelstahlmaterials - über kurz oder lang erneuert werden.

In der US-A-4 607 665 werden mehrfach gebogene Klammern offenbart, die in einer umlaufenden Nut des Innenrohrs sitzen und dieses zentriert gegenüber dem Außenrohr abstützen, wobei sie gegen die Innenseite des Außenrohrs drücken. Der Nachteil dieser Lösung besteht darin, daß aufgrund der radialen Erstreckung der Klammer zwischen Innen- und Außenrohr zwangsläufig eine unerwünschte Beweglichkeit in axialer Richtung die Folge ist, da die Klammern elastisch nachgiebig sind. Diese (unerwünschte) Verschieblichkeit eines Innenrohrs als Ganzes relativ zu dem ihm zugeordneten Außenrohr ist nicht gleichzusetzen mit einer (meist erwünschten) begrenzten Audehnungsmöglichkeit des Innenrohrs (z.B. unter Wärmeeinfluß), wobei dann aber ein Punkt des Innenrohrs gegenüber dem Außenrohr fixiert bleiben muß. Dies ist deshalb so wichtig, da ansonsten - im Falle der (wenn auch geringfügigen) Verschieblichkeit der Innenrohre gegenüber den Außenrohren - die Situation eintreten kann, daß sich, insbesondere in längeren Leitungsabschnitten, bei Temperaturrückgang nicht alle Rohre gleichmäßig zusammenziehen und an einer Stelle ein Auseinanderklaffen auftritt.

Aus der EP-A-0 060 316 ist ein Verbindungselement (Speichenkranz) bekannt, das mit Innen- **und** Außenrohr verschweißt wird. In Bezug auf die hiermit verbundenen Nachteile aufgrund der Korrosionsgefahr wird auf die obigen Ausführungen verwiesen. Ein weiterer Nachteil besteht darin, daß das Rohrelement nach Fertigung nicht mehr zerlegbar ist. Es besteht also keine Möglichkeit, an dem zwischen den Rohren befindlichen Isolierstoff oder an den innenliegenden Seiten von Innen- oder Außenrohr z. B. Wartungs- oder Kontrollarbeiten vorzunehmen.

Es kommt hinzu, daß sich bei derartigen Ausgestaltungen keine durchgehende Isolierung verwirklichen läßt, daß der insbesondere bei längeren Schornsteinen aufgrund des Temperaturgefälles erforderliche Dehnungsausgleich häufig höchst problematisch ist.

Darüber hinaus sind bei den hier in Rede stehenden Rohrabschnitten bzw. den hieraus gebildeten Schornsteinen die Verbindungselemente zwischen einander benachbarten Rohrabschnitten unter ästetischen und Montagegesichtspunkten nachteilig, weil sie zumindest abschnittsweise erheblich über den Außendurchmesser eines derartigen Rohrabschnittes nach außen überstehen, zumal gerade bei freistehenden Schornsteinen auch formgestalterische bzw. architektonische Gesichtspunkte eine erhebliche Rolle spielen.

Auch sind die zulässigen freistehenden Kragenden bei bekannten Schornsteinen der hier in Rede stehenden Art aufgrund der Ausgestaltung ihrer Rohrabschnitte relativ klein.

Der vorliegenden Erfindung liegt demgemäß die Aufgabe zugrunde, die bekannten Rohrabschnitte der eingangs beschriebenen Gattung insbesondere unter Vermeidung sämtlicher genannten Nachteile erheblich zu verbessern.

Als Lösung der vorstehenden Aufgabe ist erfindungsgemäß vorgesehen, daß die Distanzbügel an ihrem dem einen Rohr zugekehrten freien Endabschnitt mit einer Ausnehmung bzw. einem Vorsprung versehen sind, welche(r) formschlüssig mit einem entsprechenden Vorsprung bzw. einer Ausnehmung des einen Rohrs zusammenwirken (zusammenwirkt), wobei jeder Distanzbügel zwei Schenkel und einen die Schenkel verbindenden Anlageabschnitt aufweist, die Schenkel an ihrem dem Anlageabschnitt entgegengesetzten Endabschnitten an dem anderen Rohr befestigt sind und der gegenseitige Abstand der Befestigungspunkte der Schenkel an diesem Rohr größer als die Länge des Anlageabschnitts ist.

Obwohl die Distanzbügel grundsätzlich nicht nur an dem anderen (vorzugsweise Außen-)Rohr, sondern auch an dem einen (vorzugsweise Innen-)Rohr formschlüssig gehalten sein können, sind die Distanzbügel gemäß einer bevorzugten Ausgestaltung zweckmäßigerweise mit dem einen (vorzugsweise Innen-)Rohr fest verbunden und in seitlicher Ansicht im wesentlichen bevorzugt dreiecksförmig ausgebildet, und zwar jeweils aus einem entsprechend geformten Blechstreifen, dessen sich durch den zylindrischen Ringspalt zwischen dem Innen- und Außenrohr erstreckende Schenkel zwecks Stabilitätserhöhung zweckmäßigerweise gesickt sein können.

Zur Vermeidung von Korrosionsgefahr begründenden Schweißstellen am mit (heißem) Rauchgas beaufschlagten Innenrohr sind die Distanzbügel nicht unmittelbar mit diesem verschweißt, sondern zunächst mit einer Zwischenhülse, die ihrerseits (nach einem Verformungsschritt) formschlüssig mit dem Innenrohr verbunden ist.

Gemäß einer höchst bevorzugten Ausgestaltung der vorliegenden Erfindung kann der Vorsprung des anderen Rohrs als nach innen eingeformte (erste) Sicke ausgebildet und der Vorsprung eines Distanzbügels jeweils als an dessen freiem Endabschnitt ausgebildete entsprechende Ausnehmung bzw. Einformung. Obwohl dabei die (ersten) Sicken ersichtlich nicht notwendigerweise umlaufend ausgebildet sein müssen, ist letzteres bevorzugt der Fall.

In weiterer Ausgestaltung der vorliegenden Erfindung kann mit Abstand zum unteren (Muffen-)Ende und/oder zum oberen Ende des Außenrohres jeweils eine umlaufene (zweite) Sicke vorgesehen sein, wobei die zweiten Sicken bevorzugt nach innen in die Wandung des Außenrohres eingeformt sind und die Querschnittsabmessungen der zweiten Sicken gleich den Querschnittsabmessungen der ersten Sicken sein können.

Dem Außenrohr kann ein Verbindungsmittel in der Art eines Schellenbandes zugeordnet sein, welches an seinem oberen und unteren Rand bevorzugt jeweils eine den Sicken entsprechende, im wesentlichen halbkreisförmige bzw. im Querschnitt kreisförmige Umbördelung (nach innen) aufweist, wobei das schellenartige Verbindungsmittel bevorzugt jeweils mit Abstand zu seinen beiden Rändern an seiner Innenseite einen im wesentlichen tangentialen Vorsprung aufweist, dessen Abmessungen den Querschnittsabmessungen der zugeordneten Sicken entsprechen. Dabei können die beiden Vorsprünge jeweils durch eine Schraube od.dgl. gebildet sein, die durch entsprechende, nach außen geformte Vorsprünge des Verbindungsmittels geführt und an den Stirnseiten des betreffenden Vorsprungs einerseits mit ihrem Kopf und andererseits mit einer Mutter abgestützt ist, so daß bei einer derartigen Ausgestaltung die (nur relativ wenig über die Außenseite des Schellenbandes nach außen vorstehenden) Vorsprünge nicht an- bzw. aufgesetzt zu werden brauchen, sondern in das Blechmaterial der (außer den Schrauben od.dgl.) integral ausgebildeten Verbindungsschelle eingearbeitet sein können.

Bevorzugte Ausgestaltungen des erfindungsgemäßen Rohrabschnittes sind in Unteransprüchen beschrieben.

Die Erfindung ist nachstehend an Ausführungsbeispielen unter Bezugnahme auf eine Zeichnung weiter erläutert. Es zeigt:
- Fig. 1: eine seitliche Draufsicht auf einen erfindungsgemäßen Rohrabschnitt, teilweise im Schnitt;
- Fig. 2: die in Fig. 1 mit einer strichpunktierten Linie umgebende Einzelheit II in stark vergrößerter Darstellung;
- Fig. 3: eine der besseren Deutlichkeit halber aufgeschnittene perspektivische Darstellung eines Rohrendabschnittes gemäß Fig. 1 (schräg von oben gesehen) in verkleinerter Darstellung;
- Fig. 4: die Anordnung eines erfindungsgemäßen Verbindungsmittels in der Art eines Schellenbandes zum Montieren zweier einander benachbarter Rohrabschnitte gemäß den Fig. 1 bis 3 im montierten Zustand in einer gegenüber den Fig. 1 und 3 vergrößerten und gegenüber Fig. 2 verkleinerten Darstellung;
- Fig. 5: eine Seitenansicht des in Fig. 4 in montierten Zustand im Schnitt dargestellten Schellenbandes;
- Fig. 6: eine Seitenansicht auf das Schellenband gemäß Fig. 5 in Richtung de Pfeiles VI in Fig. 5 gesehen;
- Fig. 7: einen vergrößerten Schnitt durch das Schellenband gemäß Fig. 5 in Richtung der Schnittlinie VII-VII gesehen;
- Fig. 8: einen stark vergrößerten Schnitt durch das Schellenband gemäß Fig. 5 in Richtung der Schnittlinie VIII-VIII in Fig. 5 gesehen; und
- Fig. 9: einen Schnitt durch das Schellenband gemäß Fig. 5 in Richtung der Schnittlinie IX-IX in Fig. 5 gesehen.

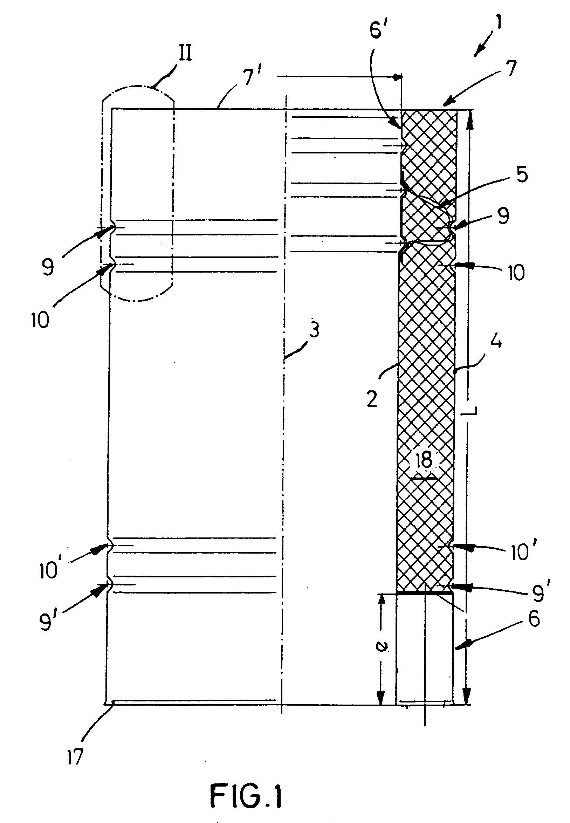

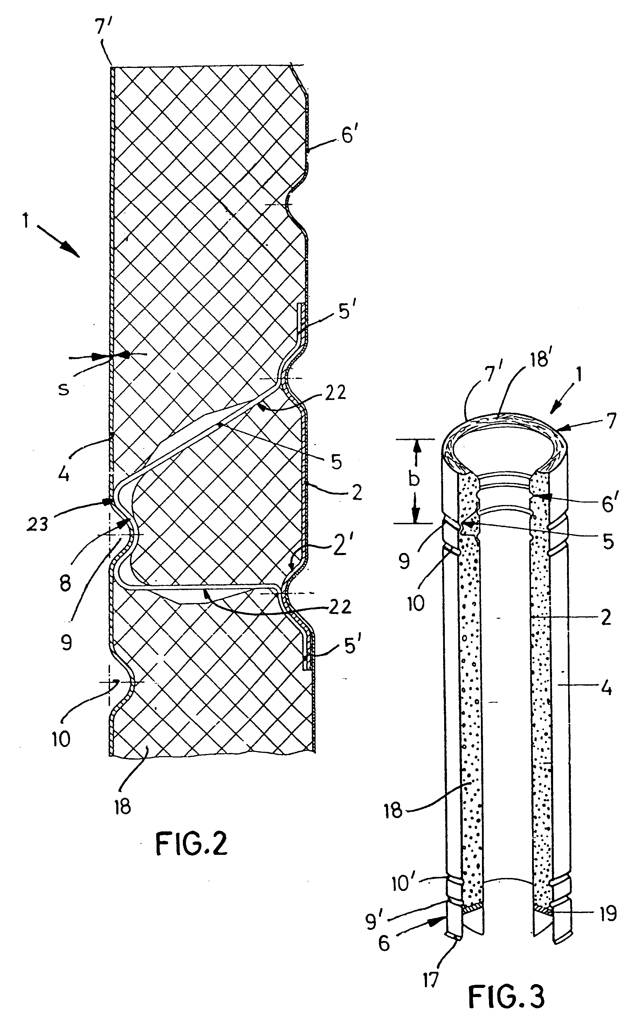

Die Fig. 1 und 3 zeigen in Seitenansicht bzw. in perspektivischer Darstellung jeweils in einem Teilschnitt einen im ganzen mit 1 bezeichneten doppelwandigen Rohrabschnitt, von dem das in Fig. 1 mit einer strichpunktierten Linie umrahmte Detail II in Fig. 2 in stark vergrößerter Darstellung (im Schnitt) wiedergegeben ist.

Der Rohrabschnitt 1 dient zur Bildung einer Rohrleitung, genauer gesagt eines nicht gemauerten Schornsteins, und weist ein Innenrohr (Innenschale) 2 sowie ein konzentrisch zur Längsmittelachse 3 angeordnetes Außenrohr 4 auf, welches mit weiter unten noch im einzelnen beschriebenen Distanzmitteln 5 mit einem Abstand a zum Innenrohr 2 gehalten ist, wobei die beiden Rohre 2, 4 jeweils an ihrem einen (Muffen-)Endabschnitt 6 auf einen lichten Innendurchmesser aufgeweitet sind, der dem Außendurchmesser an ihrem anderen Ende entspricht, so daß jeweils zwei miteinander zu verbindende, im montierten Zustand benachbarte Rohrabschnitte 1, 1 vor oder bei der Montage zusammengesteckt werden können.

Die Distanzmittel 5 sind - wie aus den Fig. 1 bis 3 erkennbar ist - an einem mit Abstand b unterhalb des oberen Endes 7 des Rohrabschnittes 1 liegenden Umfangsabschnitt angeordnet, und zwar sind - abhängig von dem Nenndurchmesser (130 bis 600 mm) vier, sechs oder acht - Distanzmittel 5 vorgesehen, die jeweils mit im wesentlichen gleichem Teilungswinkel bzw. zwischen sich eingeschlossenem Bogenabschnitt angeordnet und bügelförmig ausgebildet sind, so daß sie vor- oder nachstehend auch als Distanzbügel bezeichnet sind. Die Distanzbügel 5 sind aus Blech gebogen (s. insbesondere Fig. 2) und jeweils an ihrem freien Endabschnitt formschlüssig mit dem Außenrohr 4 verbunden.

Die Distanzbügel 5 sind an ihrer dem Innenrohr zugekehrten Seite an parallel zu Längsmittelachse 3 verlaufenden, abgebogenen Laschen 5', 5' auf eine Zwischenhülse 2' (Fig. 2) geschweißt, die ihrerseits formschlüssig mit dem Innenrohr 2 verbunden ist. Wie die Fig. 1 bis 3 (insbesondere Fig. 2) erkennen lassen, sind die Distanzbügel 5 in seitlicher Draufsicht im wesentlichen dreiecksförmig ausgebildet und weisen jeweils an ihrem dem Außenrohr 4 zugekehrten Anlageabschnitt 23 zwischen ihren Schenkeln 22 eine Ausnehmung bzw. Einformung 8 auf, welche formschlüssig mit einem entsprechenden Vorsprung 9 des Außenrohrs 4 zusammenwirkt, dessen Formgebung den Ausnehmungen bzw. Einformungen 8 der Distanzbügel 5 entspricht und als umlaufende (erste) Sicke ausgebildet ist (s. insbesondere Fig. 1 und 3). Wie aus den Zeichnungen weiter erkennbar ist, ist mit entsprechendem Abstand zum Muffenende 6 sowie zum oberen Ende 7 des Rohrabschnittes 1 jeweils eine umlaufende zweite Sicke 10 bzw. 10' in das Außenrohr 4 eingeformt, welches darüber hinaus mit entsprechendem Abstand zu seinem Muffenende 6 noch mit einer der an seinem oberen Endabschnitt vorgesehenen ersten Sicke 9 entsprechenden ersten Sicke 9' versehen ist, wobei die ersten Sicken 9, 9' ebenso wie die zweiten Sicken 10, 10' nach innen in die Wandung des Außenrohres 4 eingeformt sind und die Querschnittsabmessungen der zweiten Sicken 10, 10' gleich den Querschnittsabmessungen der ersten Sicken 9, 9' sind, obwohl dieses nicht obligatorisch ist, wie aus der weiteren Beschreibung für den zuständigen Fachmann noch ohne hervorgehen dürfte.

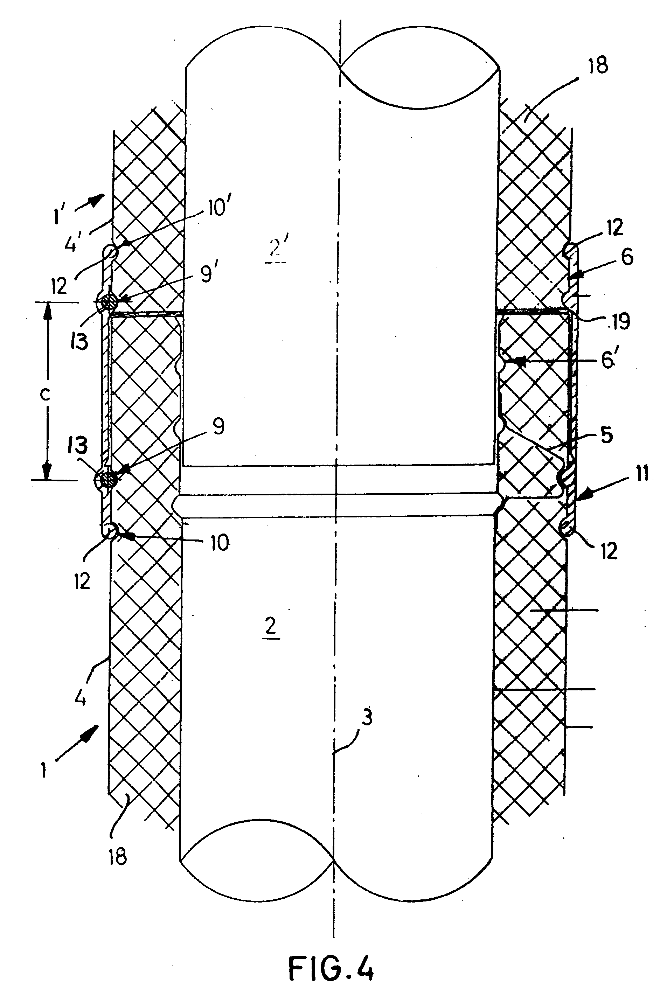

Wie aus Fig. 4 hervorgeht, welche einen (Verbindungs-)Abschnitt einer zwei benachbarte Rohrabschnitte 1, 1' enthaltenden Rohrleitung zeigt (Zwischenhülse 2' hier weggelassen), ist dem Außenrohr 4 des (unteren) Rohrabschnitts 1 ein Verbindungsmittel (zur Verbindung mit dem benachbarten Rohrabschnitt 1') in der Art eines Schellenbandes 11 zugeordnet, welches an seinem oberen und unteren Rand jeweils eine den Sicken 10' bzw. 10 entsprechende, im wesentlichen halbkreisförmige Umbördelung 12 aufweist, wobei die Umbördelungen 12, 12 gemäß Fig. 4 umlaufend formschlüssig in die Sicken 10 bzw. 10' greifen.

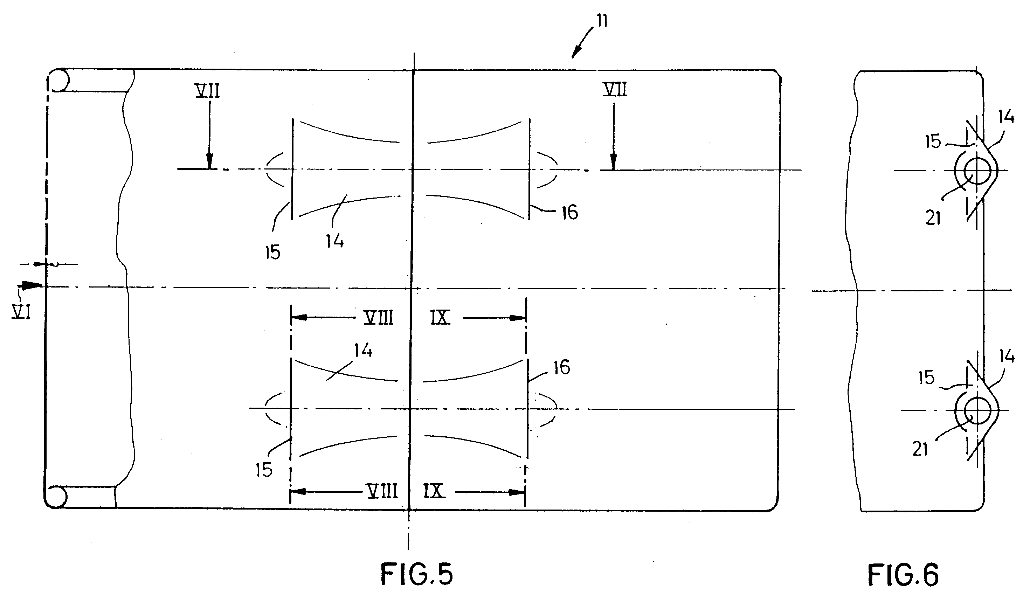

Darüber hinaus weist das Schellenband 11, welches in den Fig. 5 bis 9 eingehend dargestellt ist, jeweils mit Abstand zu seinen beiden Rändern an seiner Innenseite einen im wesentlichen tangentialen Vorsprung 13, 13 auf, dessen Abmessungen den Querschnittsabmessungen der ersten Sicken 9, 9' im wesentlichen entsprechen, wobei der gegenseitige Abstand c der Vorsprünge 13, 13 (s. Fig. 4) ersichtlich gleich dem gegenseitigen Abstand der Sicken 9, 9' der beiden miteinander verbundenen Rohrabschnitte 1, 1' im montierten Zustand ist.

Die beiden Vorsprünge 13, 13 sind jeweils durch eine Schraube gebildet, die durch entsprechende, nach außen geformte Vorsprünge 14, 14 des Schellenbandes 11 geführt und an den Stirnseiten 15 bzw. 16 des betreffenden Vorsprunges 14 einerseits mit ihrem Kopf und andererseits mit einer Mutter abgestützt sind.

Aufgrund dieser Ausgestaltung ergibt sich nicht nur ein Schellenband 11, deren Vorsprünge 14 kaum über ihren Umfang vorstehen, sondern das Schellenband 11 läßt sich (mit Ausnahme der als Vorsprünge 13, 13 dienenden Schrauben nebst Muttern) ersichtlich auch in höchst zweckmäßiger Weise einteilig fertigen, indem die Vorsprünge 14, 14 in den Mantel des Schellenbandes 11 gemäß den Fig. 5 bis 9 ein- bzw. ausgeformt werden, wobei sich diese Ausgestaltung dennoch auch unter ästhetischen Gesichtspunkten außerordentlich befriedigend zeigt (s. Fig. 5 bis 9).

Wie insbesondere aus den Fig. 1 und 3 erkennbar ist, ist der untere Muffenabschnitt 6 des Außenrohres 4 an seinem unteren Rand 17 nach außen umgebördelt, so daß dort funktionsmäßig gleichsam eine Fase entsteht, welche bei der Montage eines Schornsteins das Einführen des oberen Endabschnittes eines benachbarten Rohrabschnittes 1 erleichtert.

Während mithin im montierten Zustand der untere Endabschnitt eines weiter oben angeordneten Rohrabschnittes 1' den oberen Endabschnitt eines benachbarten Rohrabschnittes 1 übergreift, ist bei dem in der Zeichnung dargestellten Ausführungsbeispiel die Anordnung bzgl. der Innenrohre der beiden Rohrabschnitte 1', 1 bzgl. der gegenseitigen Einsteckverbindung umgekehrt getroffen.

Das Innenrohr 2 und das Außenrohr 4 eines Rohrabschnittes 1 bzw. 1' bestehen aus nichtrostendem Edelstahl, wobei die Wandstärke des Innenrohres 2 0,4 mm und die Wandstärke des Außenrohres 4 0,6 mm beträgt. Die Spaltbreite a zwischen dem Außen- und Innenrohr 4 bzw. 2 beträgt 30 mm, wobei in dem zylindrisch-ringförmigen Spaltraum eine Dämmschale 18 aus einem mineralischen Material angeordnet ist. Aufgrund der erfindungsgemäßen Konstruktion, insbesondere der erfindungsgemäßen Distanzbügel 5 ist es möglich (wie die Fig. 1 bis 4 zeigen), diese Dämmschale 18 im montierten Zustand praktisch durchgehend auszubilden, obwohl sie, wie die Fig. 1 und 3 zeigen, bei dem noch nicht montierten Rohrabschnitt 1 bzw. 1' nicht durchgehend verläuft, nämlich im (Muffen-)Endabschnitt 6 an dessen unterem Ende ausgespart ist. Dort liegt an der Dämmschale 18 von unten ein Dichtring 19 an, in den sich bei der Montage der obere Rand 7' des unteren Rohrabschnittes 1 (leicht) einschneidet, so daß die obere Stirnseite 18' eines unteren Rohrabschnittes 1 im montierten Zustand bündig bzw. "satt" an der Unterseite des Dichtringes 19 des darüber angeordneten, benachbarten Rohrabschnittes 1' anliegt (s. Fig. 4). Hierdurch wird u.a. auf einfachste Art und Weise eine hervorragende, durchgehende Dichtigkeit erreicht, so daß auch bei Überdruckverhältnissen, wie sie häufig beim Anfahren einer Heizungsanlage vorliegen, keine Feuchtigkeit in die durch die Dämmschalen 18 gebildete Isolierung gelangen kann.

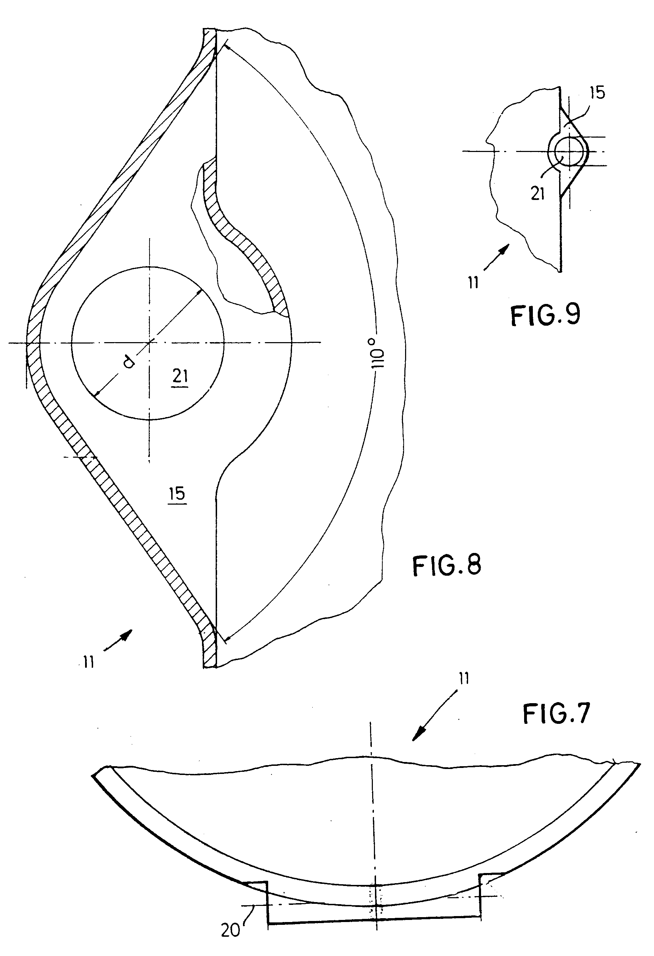

Bzgl. der Fig. 6 bis 9, welche Details des Schellenbandes 11 zeigen, sei noch nachgetragen, daß der Durchmesser d der in den Stirnseiten 15, 15 der Vorsprünge 14, 14 gebildeten Bohrungen zur Führung der nicht gezeichneten, in Fig. 7 lediglich mit einer strichpunktierten Mittellinie angedeuteten Schrauben 20 etwa gleich dem Durchmesser des betreffenden Schraubenschaftes ist, so daß diese sich in den entsprechenden Bohrungen 21 sehr einfach und zweckmäßig führen lassen.

Im übrigen ergibt sich die Montage aus den vorstehenden Zeichnungen in Verbindung mit der Beschreibung für den zuständigen Fachmann ohne weiteres. Dabei sei noch darauf verwiesen, daß sich aufgrund der hervorragenden Festigkeit des erfindungsgemäßen Rohrabschnittes 1 und der höchst zweckmäßigen gegenseitigen Verbindung durch für die beschriebenen Steckverbindungen insbesondere in Verbindung mit dem erfindungsgemäßen Schellenband 11 ein maximaler Schellenabstand von 4 m realisieren läßt, und daß darüber hinaus unter statischen Gesichtspunkten ein freistehendes Kragende des oberen Endabschnittes eines aus erfindungsgemäßen Rohrabschnitten 1 gebildeten Schornsteins bis zu wenigstens 3 m ohne weiteres möglich ist. Weiterhin ist aufgrund der oben beschriebenen und in der Zeichnung dargestellten Konstruktion ersichtlich auch bei relativ großem Temperaturgefälle der erforderliche Dehnungsausgleich in jedem Rohrabschnitt 1 gewährleistet. Aufgrund der beschriebenen Ausbildung der Wärmedämmung, insbesondere deren durchgehenden Verlauf, ist eine optimale Wärmedämmung gewährleistet, ohne daß technisch erhebliche Wärme- bzw. Kältebrücken zwischen Innen- und Außenrohr 2 bzw. 4 entstehen, wie dieses in höchstem Maße wünschenswert ist.

Bei mehrzügigen Schornsteinen lassen sich ersichtlich ohne weiteres mehrere parallele, ggf. in einem Mehreck an einer Säule od.dgl. gehaltene Schornsteinzüge realisieren, wobei auch derartige mehrzügige Schornsteine aus den erfindungsgemäßen Rohrabschnitten 1 nicht zuletzt auch den ästhetischen bzw. architektonischen Anforderungen in optimaler Weise Rechnung tragen.

| BEZUGSZEICHENLISTE | | |
|---|---|---|
| 1, 1' | doppelwandiger Rohrabschnitt | 1 |
| 2 | Innenrohr (von 1) | 2 |
| 2' | Zwischenhülse | 3 |
| 3 | Längsmittelachse (von 1, 2, 4) | 4 |
| 4 | Außenrohr (von 1) | 5 |
| 5 | Distanzmittel (bzw. -bügel) 5' - Laschen (von 5) | 6 |
| 6, 6' | (Muffen-)Endabschnitt (von 2 bzw. 4) | 7 |
| 7 | oberes Ende (von 1) 7' - oberer -Rand (von 1) | 8 |
| 8 | Ausnehmung (Einformung) (von 5) | 9 |
| 9 | Vorsprung (erste Sicke; für 8; in 4) | 10 |
| 10, 10' | zweite Sicke | 11 |
| 11 | Schellenband | 12 |
| 12 | Umbördelung | 13 |
| 13 | Vorsprünge (von 11) (=Schraube) | 14 |
| 14 | Vorsprünge (von 11) | 15 |
| 15 | Stirnseiten (von 14) | 16 |
| 16 | Stirnseiten (von 14) | 17 |
| 17 | unterer Rand (von 4) | 18 |
| 18 | Dämmschale 18' - obere Stirnseite (von 18) | 19 |
| 19 | Dichtung | 20 |
| 20 | Mittellinie (Schraube) | 21 |
| 21 | Bohrungen ( in 15) | 22 |
| 22 | Schenkel (von 5) | 23 |
| 23 | Anlageabschnitt (von 5) | 24 |
| a | Abstand (2/4) | |
| b | Abstand (5) | |
| c | Abstand (13/13) | |
| s | Dicke (von 4) | |
| d | Durchmesser (in 15) | |
| e | Abstand | |

## Patentansprüche

1. Doppelwandiger Rohrabschnitt (1; 1') für eine Rohrleitung, insbesondere einen Schornstein, mit einem Innenrohr (2) und einem konzentrisch zum Innenrohr (2) bzw. dessen Längsmittelachse (3) angeordneten Außenrohr (4), welches mit Distanzmitteln (5) im Abstand zum Innenrohr (2) gehalten ist, wobei die beiden Rohre (2, 4) jeweils an ihrem einen (Muffen-)Endabschnitt (6 bzw. 6') auf einen lichten Innendurchmesser aufgeweitet sind, der dem Außendurchmesser an ihrem anderen Ende entspricht, wobei ggf. im Zwischenraum zwischen den beiden Rohren (2, 4) ein Zwischenmaterial (18), insbesondere ein Dämmaterial, angeordnet ist, und wobei an einem Umfangsabschnitt des einen Rohres (4) mehrere mit gegenseitigem Abstand angeordnete, sich im wesentlichen radial erstreckende Distanzbügel (5) befestigt sind, die jeweils an ihren freien Endabschnitten formschlüssig mit dem anderen Rohr (2) verbunden sind, dadurch gekennzeichnet, daß die Distanzbügel (5) an ihrem dem einen Rohr (4) zugekehrten freien Endabschnitt mit einer Ausnehmung (8) oder einem Vorsprung versehen sind, welche(r) formschlüssig mit einem entsprechenden Vorsprung (9) bzw. einer Ausnehmung des einen Rohres (4) zusammenwirken (zusammenwirkt), wobei jeder Distanzbügel (5) zwei Schenkel (22) und einen die Schenkel (22) verbindenden Anlageabschnitt (23) aufweist, die Schenkel (22) an ihrem dem Anlageabschnitt (23) entgegengesetzten Endabschnitten an dem anderen Rohr (2) befestigt sind und der gegenseitige Abstand der Befestigungspunkte der Schenkel (22) an diesem Rohr (2) größer als die Länge des Anlageabschnitts (23) ist.

2. Rohrabschnitt nach Anspruch 1, dadurch gekennzeichnet, daß die Distanzbügel (5) mit dem einen Rohr (2) verschweißt sind.

3. Rohrabschnitt nach Anspruch 2, dadurch gekennzeichnet, daß der Vorsprung (9) des anderen Rohres (4) als nach innen eingeformte (erste) Sicke ausgebildet ist; und daß die Distanzbügel (5) jeweils an ihrem dem einen Rohr (4) zugekehrten freien Endabschnitt mit einer der Sickenform entsprechenden Ausnehmung bzw. Einformung (8) versehen sind.

4. Rohrabschnitt noch Anspruch 3, dadurch gekennzeichnet, daß die (erste(n)) Sicke(n) (9) umlaufend ausgebildet ist.

5. Rohrabschnitt nach einem oder mehreren der vorhergehenden Ansprüche, dadurch gekennzeichnet, daß das eine Rohr das Innenrohr (2) und das andere Rohr das Außenrohr (4) ist.

6. Rohrabschnitt nach einem oder mehreren der vorhergehenden Ansprüche, insbesondere nach einem oder mehreren der Ansprüche 3 bis 5, insbesondere nach Anspruch 5, dadurch gekennzeichnet, daß mit Abstand zum unteren (Muffen-)Ende (6) und/oder zum oberen Ende (7) des Außenrohres (4) wenigstens eine umlaufende zweite Sicke (10; 10') vorgesehen ist.

7. Rohrabschnitt nach Anspruch 6, dadurch gekennzeichnet, daß die zweiten Sicken (10, 10') nach innen in die Wandung des Außenrohres (4) eingeformt sind.

8. Rohrabschnitt nach Anspruch 5 und 7, dadurch gekennzeichnet, daß die Querschnittsabmessungen der zweiten Sicken (10, 10') gleich den Querschnittsabmessungen der ersten Sicken (9, 9') sind.

9. Rohrabschnitt nach einem oder mehreren der vorhergehenden Ansprüche, insbesondere nach Anspruch 8, dadurch gekennzeichnet, daß dem Außenrohr (4) ein Verbindungsmittel in der Art eines Schellenbandes (11) zugeordnet ist, welches an seinem oberen und unteren Rand jeweils eine den zweiten Sicken (10 bzw. 10') entsprechende, im wesentlichen halbkreisförmige Umbördelung (12) aufweist.

10. Rohrabschnitt nach Anspruch 9, dadurch gekennzeichnet, daß das schellenartige Verbindungsmittel (11) jeweils mit Abstand zu seinen beiden Rändern an seiner Innenseite einen im wesentlichen tangentialen Vorsprung (13, 13) aufweist, dessen Abmessungen den Querschnittsabmessungen der ersten Sicken (9, 9') entsprechen, wobei der gegenseitige Abstand (c) der beiden Vorsprünge (13, 13) gleich dem gegenseitigen Abstand der Sicken (9, 9') zweier miteinander verbundener Rohrabschnitte (1, 1') im montierten Zustand ist.

11. Rohrabschnitt nach Anspruch 10, dadurch gekennzeichnet, daß die beiden Vorsprünge (13, 13) jeweils durch eine Schraube od.dgl. gebildet sind, die durch entsprechende, nach außen geformte Vorsprünge (14, 14) des Schellenbandes (11) geführt und an den Stirnseiten (15 bzw. 16) des betreffenden Vorsprungs (14) einerseits mit ihrem Kopf und andererseits mit einer Mutter abgestützt ist.

12. Rohrabschnitt nach einem oder mehreren der vorhergehenden Ansprüche, dadurch gekennzeichnet, daß der erweiterte (Muffen-)Endabschnitt (6) des Außenrohres (4) an seinem unteren Rand nach außen umgebördelt ist.

13. Rohrabschnitt nach einem oder mehreren der vorhergehenden Ansprüche, gekennzeichnet durch eine an sich bekannte Herstellung aus einem nichtrostenden Edelstahlblech.

14. Rohrabschnitt nach einem oder mehreren der vorhergehenden Ansprüche, gekennzeichnet durch eine Muffen-Verbindungslänge von 6 cm.

15. Rohrabschnitt nach einem oder mehreren der vorhergehenden Ansprüche, gekennzeichnet durch eine Wandstärke des Innenrohres (2) von ca. 0,4 mm und eine Wandstärke (s) des Außenrohres (4) von ca. 0.6 mm.

16. Rohrabschnitt nach einem oder mehreren der vorhergehenden Ansprüche, gekennzeichnet durch eine Ring-Spaltbreite (a) zwischen dem Außen- und Innenrohr (4 bzw. 2) von ca. 3 cm.

17. Rohrabschnitt nach einem oder mehreren der vorhergehenden Ansprüche, gekennzeichnet durch einen Nenndurchmesser des Außenrohres (4) zwischen ca. 130 und 600 mm.

18. Rohrabschnitt nach einem oder mehreren der vorhergehenden Ansprüche, gekennzeichnet durch Einheitslängen (L) zwischen ca. 300 (= 333,3) und 1000 mm.

19. Rohrabschnitt nach einem oder mehreren der vorhergehenden Ansprüche, dadurch gekennzeichnet, daß mit Abstand (e) zum unteren Rand (17) des erweiterten Muffenendes (6) zwischen dem Innen- und Außenrohr (2 bzw. 4) eine Dichtung (19) angeordnet ist.

20. Rohrabschnitt nach Anspruch 19 dadurch gekennzeichnet, daß die Dichtung als Scheibendichtung (19) ausgebildet ist.

## Claims

1. A double-walled section of piping (1; 1') for a pipeline, more particularly a chimney, comprising an inner pipe (2) and an outer pipe (4) disposed concentrically to the inner pipe (2) or its longitudinal centre-line (3), said outer pipe being held at a distance from the inner pipe (2) by spacer means (5), the two pipes (2, 4) each being widened out at their respective one (socket) end portion (6, 6') to give a clear inside diameter corresponding to the outside diameter at their other end, an intermediate material (18), more particularly an insulating material, being provided if required in the gap between the two pipes (2, 4), and a plurality of mutually spaced and substantially radially extending spacer members (5) are secured to a peripheral section of one pipe (4), such spacer members each being connected positively at their free end portions to the other pipe (2), characterised in that the spacer members (5) have a recess (8) or a projection at their free end portion facing one pipe (4), such recess or projection cooperating positively with a corresponding projection (9) and recess in the one pipe (4), each spacer member (5) comprising two limbs (22) and a contact portion (23) connecting the limbs, the limbs (22) are fixed to the other pipe (2) at their end portions remote from the contact portion (23), and the mutual distance between the fixing points of the limbs (22) on said pipe (2) is greater than the length of the contact portion (23).

2. A section of piping according to claim 1, characterised in that the spacer members (5) are welded to the one pipe (2).

3. A section of piping according to claim 2, characterised in that the projection (9) on the other pipe (4) is formed as an inwardly formed (first) corrugation; and in that the spacer members (5) each have, at their free end portion facing the one pipe (4), a recess or the like (8) corresponding to the corrugation shape.

4. A section of piping according to claim 3, characterised in that the or each first corrugation (9) is continuous.

5. A section of piping according to one or more of the preceding claims, characterised in that the one pipe is the inner pipe (2) and the other pipe is the outer pipe (4).

6. A section of piping according to one or more of the preceding claims, more particularly one or more of claims 3 to 5, more particularly claim 5, characterised in that at least one continuous second corrugation (10; 10') is provided at a distance from the bottom (socket) end (6) and/or from the top end (7) of the outer pipe (4).

7. A section of piping according to claim 6, characterised in that the second corrugations (10, 10') are formed inwardly into the wall of the outer pipe (4).

8. A section of piping according to claim 5 or 7, characterised in that the cross-sectional dimensions of the second corrugations (10, 10') are equal to the cross-sectional dimensions of the first corrugations (9, 9').

9. A section of piping according to one or more of the preceding claims, more particularly claim 8, characterised in that the outer pipe (4) is associated with a connecting means in the form of a strap (11), having substantially semicircular crimping (12) at its top and bottom edges corresponding in each case to the second corrugations (10, 10').

10. A section of piping according to claim 9, characterised in that the strap-like connecting means (11) has on the inside a substantially tangential projection (13, 13) at a distance from each of its two edges, the dimensions of such projections corresponding to the cross-sectional dimensions of the first corrugations (9, 9'), the distance (c) between the two projections (13, 13) being equal to the distance between the corrugations (9, 9') of two interconnected piping sections (1, 1') in the installed state.

11. A section of piping according to claim 10, characterised in that the two projections (13, 13) are each formed by a screw or the like passing through corresponding outwardly formed projections (14, 14) on the strap (11), said projections (13, 13) being supported at the end faces (15, 16) of the associated projection (14) by their head, on the one hand, and by a nut, on the other hand.

12. A section of piping according to one or more of the preceding claims, characterised in that the widened (socket) end portion (6) of the outer pipe (4) is flanged over outwardly at its bottom edge.

13. A section of piping according to one or more of the preceding claims, characterised by manufacture known per se from a non-rusting high-grade steel plate.

14. A section of piping according to one or more of the preceding claims, characterised by a socket connection length of 6 cm.

15. A section of piping according to one or more of the preceding claims, characterised by a wall thickness of the inner pipe (2) of about 0.4 mm and a wall thickness (s) of the outer pipe (4) of about 0.6 mm.

16. A section of piping according to one or more of the preceding claims, characterised by an annular gap width (a) of about 3 cm between the outer and inner pipes (4, 2).

17. A section of piping according to one or more of the preceding claims, characterised by a nominal diameter of the outer pipe (4) between about 130 and 600 mm.

18. A section of piping according to one or more of the preceding claims, characterised by unit lengths (L) between about 300 (= 333.3) and 1000 mm.

19. A section of piping according to one or more of the preceding claims, characterised in that a seal (19) is disposed between the inner and outer pipes (2, 4) at a distance (e) from the bottom edge (17) of the widened socket end (6).

20. A section of piping according to claim 19, characterised in that the seal is constructed as a sealing washer (19).

## Revendications

1. Elément tubulaire à double paroi (1 ; 1') pour un conduit, en particulier pour un conduit de fumée, comprenant un tube intérieur (2) et un tube extérieur (4) qui est disposé de manière concentrique au tube intérieur (2) ou à son axe longitudinal médian (3) et qui est maintenu à distance du tube intérieur (2) par des moyens d'entretoisement (5), les deux tubes (2, 4) étant chacun élargis, au niveau de l'une de leur parties extrêmes (formant manchon) (6 et 6'), pour présenter un diamètre intérieur libre correspondant au diamètre extérieur à leur autre extrémité, un matériau intermédiaire (18), en particulier un matériau isolant, pouvant éventuellement être placé dans l'interstice compris entre les deux tubes (2, 4), sur une partie périphérique de l'un des tubes (4) étant fixés plusieurs étriers d'entretoisement (5) qui s'étendent sensiblement dans le sens radial et sont placés à distance les uns des autres et qui sont chacun reliés à l'autre tube (2) par complémentarité de formes au niveau de leur partie extrême libre, caractérisé en ce que, à leur partie extrême libre tournée vers le premier tube (4), les étriers d'entretoisement (5) sont pourvus d'un évidement (8) ou d'une saillie qui coopère par complémentarité de formes avec une saillie correspondante (9) ou un évidement du premier tube (4), chaque étrier d'entretoisement (5) comportant deux branches (22) et une partie d'appui (23) qui relie les branches (22), les branches (22) étant fixées au second tube (2) par leurs parties extrêmes opposées à la partie d'appui (23), et l'écartement mutuel des points de fixation des branches (22) sur ce tube (2) étant supérieur à la longueur de la partie d'appui (23).

2. Elément tubulaire selon la revendication 1, caractérisé en ce que les étriers d'entretoisement (5) sont soudés au premier tube (2).

3. Elément tubulaire selon la revendication 2, caractérisé en ce que la saillie (9) du second tube (4) est conçue sous la forme d'une (première) moulure renfoncée vers l'intérieur ; et en ce que les étriers d'entretoisement (5) comportent, à leur partie extrême libre tournée vers le second tube (4), un évidement ou un renfoncement (8) correspondant à la forme de la moulure.

4. Elément tubulaire selon la revendication 3, caractérisé en ce que la (les) (première(s)) moulure(s) (9) est (sont) périphérique(s).

5. Elément tubulaire selon une ou plusieurs des revendications précédentes, caractérisé en ce que le premier tube est le tube intérieur (2) et le second tube est le tube extérieur (4).

6. Elément tubulaire selon une ou plusieurs des revendications précédentes, en particulier selon une ou plusieurs des revendications 3 à 5, en particulier selon la revendication 5, caractérisé en ce qu'au moins une seconde moulure périphérique (10 ; 10') est prévue à distance de l'extrémité inférieure (formant manchon) (6) et/ou de l'extrémité supérieure (7) du tube extérieur (4).

7. Elément tubulaire selon la revendication 6, caractérisé en ce que les secondes moulures (10, 10') sont renfoncées vers l'intérieur dans la paroi du tube extérieur (4).

8. Elément tubulaire selon les revendications 5 et 7, caractérisé ence que les dimensions en coupe transversale des secondes moulures (10, 10') sont égales aux dimensions en coupe transversale des premières moulures (9, 9').

9. Elément tubulaire selon une ou plusieurs des revendications précédentes, en particulier selon la revendication 8, caractérisé en ce qu'au tube extérieur (4) est associé un moyen de liaison en forme de collier (11) qui comporte, au niveau de ses bords supérieur et inférieur, un rebord rabattu qui correspond aux secondes moulures (10 ou 10') et qui est de forme sensiblement semi-circulaire.

10. Elément tubulaire selon la revendication 9, caractérisé en ce que le moyen de liaison (11) en forme de collier comportant, à distance de ses deux bords, sur son côté intérieur, une saillie sensiblement tangentielle (13, 13) dont les dimensions correspondent aux dimensions en coupe transversale des premières moulures (9, 9'), la distance (c) entre les deux saillies (13, 13) étant, en position montée, égale à la distance entre les moulures (9, 9') des deux éléments tubulaires assemblés (1, 1').

11. Elément tubulaire selon la revendication 10, caractérisé en ce que les deux saillies (13, 13) sont chacune formées par une vis ou analogue, qui traverse des saillies correspondantes (14, 14), dirigées vers l'extérieur, du collier (11) et qui prend appui sur les faces frontales (15 ou 16) de la saillie correspondante (14), d'une part, par l'intermédiaire de sa tête et, d'autre part, par l'intermédiaire d'un écrou.

12. Elément tubulaire selon une ou plusieurs des revendications précédentes, caractérisé en ce que la partie extrême (formant manchon) élargie (6) du tube extérieur (4) comporte, sur son bord inférieur, un rebord rabattu vers l'extérieur.

13. Elément tubulaire selon une ou plusieurs des revendications précédentes, caractérisé par une fabrication connue en tôle d'acier fin inoxydable.

14. Elément tubulaire selon une ou plusieurs des revendications précédentes, caractérisé en ce que la longueur de liaison du manchon est de 6 cm.

15. Elément tubulaire selon une ou plusieurs des revendications précédentes, caractérisé en ce que l'épaisseur de la paroi du tube intérieur (2) est d'environ 0,4 mm et l'épaisseur (s) de la paroi du tube extérieur (4) est d'environ 0,6 mm.

16. Elément tubulaire selon une ou plusieurs des revendications précédentes, caractérisé en ce que la largeur (a) de l'interstice annulaire compris entre les tubes extérieur et intérieur (4 et 2) est d'environ 3 cm.

17. Elément tubulaire selon une ou plusieurs des revendications précédentes, caractérisé en ce que le diamètre nominal du tube extérieur (4) est compris entre environ 130 et 600 mm.

18. Elément tubulaire selon une ou plusieurs des revendications précédentes, caractérisé en ce qu'il présente une longueur unitaire (L) comprise entre environ 300 (= 333,3) et 1 000 mm.

19. Elément tubulaire selon une ou plusieurs des revendications précédentes, caractérisé en ce qu'un joint d'étanchéité (19) est disposé à distance (e) du bord inférieur (17) de l'extrémité élargie (6) formant manchon, entre les tubes intérieur et extérieur (2 ou 4).

20. Elément tubulaire selon la revendication 20, caractérisé en ce que le joint d'étanchéité est conçu sous la forme d'un joint en forme de disque (19).
